# EUROPÄISCHE PATENTSCHRIFT

(11) **EP 1 685 276 B1**
(45) Veröffentlichungstag und Bekanntmachung des Hinweises auf die Patenterteilung: **22.02.2012**
(21) Anmeldenummer: 04761063.9
(22) Anmeldetag: 06.10.2004
(51) Int. Cl.: C25B 1/04, C25B 9/06

(54) **VORRICHTUNG ZUR UMWANDLUNG VON ENERGIE**
ENERGY CONVERTING DEVICE
DISPOSITIF DE CONVERSION D'ENERGIE

(30) Priorität: 14.10.2003 AT 16182003
(43) Veröffentlichungstag der Anmeldung: 02.08.2006
(73) Patentinhaber: Bierbaumer, Hans-Peter Dr. h.c., 4532 Rohr/Kremstal (AT)
(72) Erfinder: Bierbaumer, Hans-Peter Dr. h.c., 4532 Rohr/Kremstal (AT)
(74) Vertreter: Secklehner, Günter
(86) Internationale Anmeldenummer: PCT/AT2004/000341
(87) Internationale Veröffentlichungsnummer: WO 2005/035833

(56) Entgegenhaltungen:
- WO-A-00/66811
- WO-A-02/066585
- WO-A-03/066935
- WO-A-2004/097072
- DE-A- 2 159 246

## Beschreibung

Die Erfindung betrifft eine Vorrichtung und ein Verfahren zur Umwandlung von Energie mit einem Gasgenerator zur Erzeugung eines Wasserstoff-Sauerstoff-Gemisches bzw. von Brown-Gas, entsprechend den Merkmalen in den Oberbegriffen der Ansprüche 1 und 22.

Aus dem Dokument US 6,443,725 B1 ist bereits eine Heizungsvorrichtung bzw. ein Verfahren zur Erzeugung von Wärme, basierend auf der zyklischen Verbrennung von Brown-Gas bekannt. Brown-Gas wird durch eine spezielle Form der Elektrolyse aus Wasser in einem sogenannten Brown-Gasgenerator hergestellt. Durch die elektrolytische Behandlung des Wassers in dem Brown-Gasgenerator wird dieses in den speziellen Zustand überführt und besteht aus einer Mischung aus dissoziierten Wasserstoff- und Sauerstoffatomen. Gemäß der US 6,443,725 B1 wird das Brown-Gas einer Verbrennungskammer zugeführt, wo es nach der Verbrennung in Wassermoleküle rückverwandelt wird. Die Wassermoleküle, werden anschließend durch Aufnahme von Infrarotstrahlung in Wasserstoff und Sauerstoff ionisiert.

Aus dem Dokument US 4,014,777 A sind Vorrichtungen und Verfahren zur Herstellung von Wasserstoff und Sauerstoff in der Form von Brown-Gas bekannt. Dieses Brown-Gas wird in der Folge zum Schweißen oder Löten verwendet. Gemäß einer Ausführungsform eines Brown-Gasgenerators ist eine Elektrolysezelle mit in Serie angeordneten Elektrodenplatten beschrieben. Diese Elektrodenplatten sind in einer Röhre aus isolierendem Material befestigt, wobei zwischen jeweils benachbarten Elektroden Öffnungen der Röhre vorgesehen sind. Die Elektroden im Endbereich der Röhre sind nach Außen hin zu einer Stromversorgung elektrisch kontaktiert. Die Röhre mit den Elektroden ist in eine Lösung aus Wasser und KOH eingetaucht. Durch die Öffnungen in der Röhre kann einerseits Lösung zwischen die Elektroden eintreten und andererseits das gebildete Gas aus dem Raum zwischen den Elektroden austreten. Gegenüber konventionellen Gasschweißapparaturen hat diese Vorrichtung den Vorteil, dass Wasserstoff und Sauerstoff automatisch im richtigen Verhältnis hergestellt werden, um eine neutrale Flamme erzeugen zu können.

Die WO 03/066935 A beschreibt einen Braungasgenerator, in dem innerhalb einer elektrolytischen Zelle an verschiedenen Orten unabhängig voneinander Braungas generiert wird. Für jeden der unterschiedlichen Bereiche ist eine Wasserzufuhr und eine Wasserkühlung vorgesehen, sodass die Temperatur in der elektrolytischen Zelle auf einem optimalen Niveau gehalten wird und die Effizienz an erzeugtem Braungas steigt. In Fig. 1 dieser WO-A wird eine herkömmliche Braungaszelle gezeigt, die einen Mantel umfasst, in dem konzentrisch angeordnete Elektroden vorhanden sind. Die Zu- bzw. Abfuhr von Wasser bzw. Braungas erfolgt über einen Zulauf bzw. Ablauf, die axial angeordnet sind.

Die WO 00/66811 A zeigt einen Braungasgenerator bzw. eine elektrolytische Zelle zur Elektrolyse von Wasser, welche jener der WO 03/066935 A sehr ähnlich ist. Es wird darin Wasser in Sauerstoff- und Wasserstoffgas in großer Menge innerhalb kurzer Zeit gespalten. Die elektrolytische Zelle weist einen Sauerstoff- und einen Wasserstoffgenerator auf, die mit einer Gleichstromquelle verbunden sind. Über ein Ventil wird der Innendruck kontrolliert. Weiters ist ein Filter vorgesehen, um Verunreinigungen der Gasmischung zu entfernen.

Die Aufgabe der Erfindung ist es, eine Vorrichtung und ein Verfahren zur Umwandlung von Energie unter Verwendung eines Wasserstoff-Sauerstoff-Gemisch bzw. von Brown-Gas zu schaffen, mit der bzw. mit dem ein erhöhter Wirkungsgrad erzielt werden kann. Eine weitere Aufgabe der Erfindung ist es, eine erhöhte Produktivität bei der Erzeugung des Wasserstoff-Sauerstoff-Gemisches bzw. Brown-Gases zu erreichen.

Diese Aufgabe der Erfindung wird durch die Vorrichtung zur Umwandlung von Energie entsprechend den Merkmalen des Anspruchs 1 gelöst. Der Vorteil dieser Vorrichtung liegt darin, dass damit ein größerer Wirkungsgrad erzielt werden kann, in dem durch die rotationsförmige Ausbildung des Reaktionsraums des Gasgenerators die gleichzeitige Einwirkung eines elektrischen Feldes und einer Rotationsbewegung auf das Arbeitsmedium bzw. das Wasser ermöglich wird und so in der Folge die Bildung von Brown-Gas begünstigt bzw. deren Bildungsrate erhöht wird.

Vorteilhaft ist auch die Weiterbildung, wonach zumindest ein tangential zum Mantel des Reaktionsraums ausgerichteter Einlaufstutzen für das Arbeitsmedium in dem Mantel des Reaktionsraums ausgebildet ist, da dadurch das Arbeitsmedium alleine schon durch die Einströmbewegung des Arbeitsmediums in den Reaktionsraum in Rotation versetzt wird.

Vorteilhaft ist auch die Weiterbildungen der Vorrichtung zur Umwandlung von Energie, wonach der Rotor zur Erzeugung einer Rotation mit einem Betrag der Winkelgeschwindigkeit aus einem Bereich von 10 s⁻¹ bis 25 s⁻¹ ausgebildet ist, da dadurch eine auf die Blasen des sich bildenden Brown-Gases in Richtung auf die Achse des Reaktionsraums konzentrierend wirkende Kraft ausgeübt werden kann.

Die Weiterbildung der Vorrichtung zur Umwandlung von Energie mit einer in einer den Reaktionsraum abschließenden Bodenplatte und/oder Deckplatte ausgebildeten Ausströmöffnung, die bezüglich der Achse des Reaktionsraums koaxial angeordnet ist, hat den Vorteil, dass damit das sich im Bereich der Achse des Reaktionsraums bildende Brown-Gas durch diese Ausströmöffnung leicht abgesaugt werden kann.

Die Ausbildung, wonach die Ausströmöffnung durch eine parallel zur Richtung der Achse des Reaktionsraums verstellbare Absauglanze ausgebildet ist, hat den Vorteil, dass damit ein unerwünschtes Absaugen vom Arbeitsmedium mit dem im Reaktionsraum gebildeten Brown-Gas minimiert werden kann, in dem die Einschiebtiefe der Absauglanze entsprechend eingestellt wird und so die Ausströmöffnung möglichst nah an den Ort der Entstehung des Brown-Gases herangeführt wird.

Die Ausbildung der Vorrichtung zur Umwandlung von Energie mit einer Schallquelle bzw. in dem die Schallquelle zur Erzeugung von Schall mit einer Frequenz aus einem Bereich 25 kHz bis 55 kHz, vorzugsweise von 38,5 kHz bis 41,5 kHz, bevorzugt 40,5 kHz ausgebildet ist, hat den Vorteil, dass durch diese Beaufschlagung des Arbeitsmediums mit Schall, die Bildungsrate des Brown-Gases erhöht wird.

Vorteilhaft sind auch die Weiterbildungen der Vorrichtung, in dem die Schallquelle bezüglich der Achse des Reaktionsraums koaxial ausgebildet ist bzw. zumindest ein Teilbereich der inneren Begrenzungsfläche des Reaktionsraums als ein den Schall konzentrierender Reflektor geformt ist, da damit der Schall im Bereich der Achse konzentriert bzw. der Schalldruck im Bereich der Achse erhöht werden kann.

Von Vorteil ist auch die Ausbildung der Vorrichtung, in dem der Gasgenerator mit einer Infrarotquelle ausgebildet ist, da durch das Beaufschlagen des Arbeitsmediums mit Infrarotstrahlung ebenfalls eine positive Beeinflussung der Bildung des Brown-Gases bewirkt werden kann bzw. die Bildung des Brown-Gases beschleunigt wird.

Durch die Weiterbildung der Vorrichtung zur Umwandlung von Energie, wobei der Gasgenerator mit einem Magneten ausgebildet ist bzw. die im Magnetfeldrichtung des Magneten im Bereich der Achse des Reaktionsraums bezüglich der Richtung der Winkelgeschwindigkeit des Rotors bzw. der Drehbewegung des Arbeitsmediums in den Reaktionsraum antiparallel ausgerichtet ist, wird der Vorteil erzielt, dass die Abscheidung von molekularem Sauerstoff bzw. molekularem Wasserstoff an den beiden Elektroden zugunsten der Bildung von Brown-Gas unterdrückt wird. Durch die Drehbewegung des Arbeitsmediums im Magnetfeld des Magneten mit einer antiparallelen Einstellung der Magnetfeldrichtung bezüglich der Winkelgeschwindigkeit der Drehbewegung des Arbeitsmediums wird nämlich erreicht, dass auf Ionen in dem Arbeitsmedium durch das Magnetfeld eine resultierende Kraftwirkung ausgeübt wird, die die Ionen auf eine spiralförmige, in Richtung auf die Achse des Reaktionsraums verlaufende Bewegungsbahn, zwingt. Es wird somit verhindert, dass sich die Ionen den Elektroden nähern und sich dort abscheiden.

Die Ausbildung der Vorrichtung zur Umwandlung von Energie mit einem Druckgefäß für das Arbeitsmedium hat den Vorteil, dass damit der Druck des Arbeitsmediums in der Vorrichtung optimal eingestellt werden kann, wodurch die Bildungsrate des Brown-Gases begünstigt wird.

Vorteilhaft ist auch die Weiterbildung der Vorrichtung zur Umwandlung von Energie, indem diese durch eine Heizungsvorrichtung mit einem Thermogenerator gebildet wird, wobei der Innenraum des Thermogenerators mit einem Sinterwerkstoff bzw. Sintermetall ausgebildet bzw. erfüllt ist, da dadurch beim Durchströmen des Brown-Gases durch diesen Sinterwerkstoff eine vergleichsweise langsam erfolgende Rekombination bzw. Umwandlung in Wasser erfolgt, bei der eine offene Flammenbildung unterbleibt.

Die Ausbildung der Heizungsvorrichtung, wonach der Gasgenerator, der Thermogenerator, der Wärmetauscher, das Druckgefäß und die Pumpe zu einem geschlossenen Kreislauf für das Arbeitsmedium miteinander verbunden sind, hat den Vorteil, dass das Arbeitsmedium in dem Kreislauf verbleiben kann und eine Entsorgung von Abwasser bzw. Reststoffen nicht erforderlich ist. Insbesondere wird damit vermieden, dass in das Arbeitsmedium gegebenenfalls eingebrachte Elektrolyten allmählich verbraucht werden bzw. verloren gehen.

Durch die Ausbildung der Heizungsvorrichtung, wonach an dem Wärmetauscher ein Ventilator zur Abfuhr der Wärme von dem Wärmetauscher an die Umgebung angeordnet ist, wird der Vorteil erzielt, dass damit das Ausmaß der Wärmeabgabe reguliert werden kann, in dem die Menge der an dem Wärmetauscher vorbeiströmenden Luft verändert wird.

Die Weiterbildung der Vorrichtung zur Umwandlung von Energie mit einer Steuervorrichtung zur Steuerung des Betriebszustandes hat den Vorteil, dass damit eine zentrale Einstellung aller Parameter der einzelnen Komponenten der Vorrichtung ermöglicht wird.

Vorteilhaft ist auch die Ausbildung der Steuervorrichtung zur automatisierten bzw. programmbasierten Steuerung, da dadurch die Einstellung und insbesondere die automatisierte Nachregelung des Betriebszustandes zur optimalen Ausbeute von Wärme bzw. Bildung von Brown-Gas in den Gasgenerator selbstständig erfolgen kann.

Die Aufgabe der Erfindung wird eigenständig auch durch das Verfahren zur Umwandlung von Energie mit einem Wasserstoff-Sauerstoff-Gemisch bzw. Brown-Gas entsprechend den Merkmalen des Anspruches 23 gelöst. Vorteilhaft ist dabei, dass mit diesem Verfahren ein erhöhter Wirkungsgrad erzielt werden kann.

Die Ausbildung des Verfahrens, wonach das Wasser und/oder das Brown-Gas in dem Reaktionsraum mit einem Magnetfeld beaufschlagt wird, wobei die magnetische Induktion im Bereich der Achse des Reaktionsraums antiparallel bezüglich der Richtung der Winkelgeschwindigkeit ausgerichtet ist, hat den Vorteil, dass dadurch auf die sich in den rotierenden Arbeitsmedium befindlichen Ionen durch das Magnetfeld eine in Richtung auf die Achse der Rotationsbewegung in gerichteter Kraftwirkung ausgeübt wird und so die Bildung des Brown-Gases im Bereich der Achse der Rotationsbewegung des Arbeitsmediums begünstigt wird.

Die Weiterbildung des Verfahrens, in dem das Wasser und/oder das Brown-Gas in dem Reaktionsraum mit Schallenergie beaufschlagt wird, bzw. in dem das Wasser und/oder das Brown-Gas in dem Reaktionsraum mit Infrarotstrahlung beaufschlagt wird, hat den Vorteil, dass dadurch die Bildungsrate des Brown-Gases erhöht wird.

Von Vorteil ist auch die Weiterbildung des Verfahrens, wonach das Wasser und das Brown-Gas in einen geschlossenen Kreislauf befördert werden, da dadurch einerseits die Entsorgung von Reststoffen nicht erforderlich ist und andererseits in dem Arbeitsmedium bzw. dem Wasser eingebrachte Elektrolyten nicht verbraucht werden.

Eine Optimierung der Bildungsrate des Brown-Gases kann in vorteilhafter Weise auch dadurch erzielt werden, dass die Winkelgeschwindigkeit der Rotation des Wassers in dem Reaktionsraum bzw. der Druck des Arbeitsmediums in den Kreislauf bzw. die Schallintensität einer Schallquelle periodisch verändert werden. Dazu trägt auch bei, dass die periodische Veränderung des Drucks des Arbeitsmediums bezüglich der periodischen Veränderung der Schallintensität der Schallwelle in Gegenphase erfolgt bzw. dass der Wert der Frequenz der periodischen Veränderung des Drucks des Arbeitsmediums und/oder der Schallintensität der Schallquelle und/oder der Winkelgeschwindigkeit aus einem Bereich zwischen 0,1 Hz und 10 Hz gewählt ist.

Vorteilhaft ist auch die Weiterbildung des Verfahrens, wonach die Rekombination des Wasserstoff-Sauerstoff-Gemisches bzw. des Brown-Gases in Wasser in einem Thermogenerator erfolgt, wobei die im Thermogenerator gebildete Wärme mit dem Wasser abgeführt wird, da so kein separates Medium zum Transport der Wänne erforderlich ist.

Durch die Ausbildung des Verfahrens, wonach das Brown-Gas in dem Thermogenerator durch einen Sinterwerkstoff hindurchgeleitet wird, wird der Vorteil erzielt, dass so Flammenbildung bei der Rekombination des Brown-Gases zu Wasser unterbleibt und die Transformation des Brown-Gases in Wasser vergleichsweise langsam erfolgt.

Zum besseren Verständnis der Erfindung wird diese anhand der nachfolgenden Figuren näher erläutert.

Es zeigen in schematisch vereinfachter Darstellung:
- Fig. 1: ein Anlagenschema einer Heizungsvorrichtung, dargestellt als Blockschaltbild eines Luftheizungssystems;
- Fig. 2: den Aufbau des Gasgenerators als Detail der Heizungsvorrichtung schematisiert dargestellt;
- Fig. 3: ein weiteres Ausführungsbeispiel eines Gasgenerators einer Heizungsvorrichtung mit einem zylinderförmigen Reaktionsraum, geschnitten dargestellt;
- Fig. 4: ein Ausführungsbeispiel des Gasgenerators der Heizungsvorrichtung mit einer in dem Reaktionsraum angeordneten Schallquelle;
- Fig. 5: ein weiteres Ausführungsbeispiel des Gasgenerators der Heizungsvorrichtung mit einer Infrarotquelle und einem Magneten;
- Fig. 6: ein weiteres Ausführungsbeispiel eines Gasgenerators.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

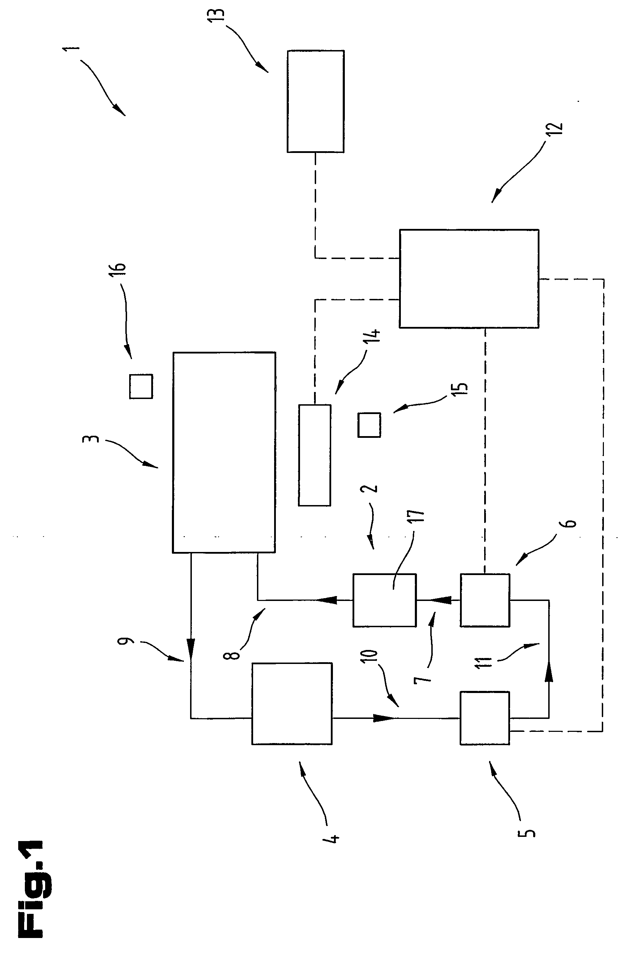

Die Fig. 1 zeigt ein Anlagenschema einer Heizungsvorrichtung 1, dargestellt als Blockschaltbild eines Luftheizungssystems.

Die Heizungsvorrichtung 1 bildet ein Beispiel einer Vorrichtung zur Umwandlung von Energie, mit deren Hilfe die Erfindung nachfolgend näher beschrieben wird.

Ein Thermogenerator 2, ein Wärmetauscher 3, ein Druckgefäß 4, eine Pumpe 5 und ein Gasgenerator 6 sind zu einem geschlossenen Kreislauf für ein Arbeitsmedium miteinander verbunden. Als Arbeitsmedium dient Wasser, dass im Gasgenerator 6 in ein Wasserstoff-Sauerstoff-Gemisch bzw. in Brown-Gas umgewandelt wird. Durch eine Leitung 7 gelangt das Brown-Gas in den Thermogenerator 2, wo durch Umwandlung des Brown-Gases in Wasser Wärme erzeugt wird, die anschließend mit diesem Wasser über eine Leitung 8 in den Wärmetauscher 3 transportiert wird. Durch diesen Wärmetauscher 3 wird Wärme an die Umgebungsluft abgegeben, wobei sich die Temperatur des Arbeitsmediums bzw. des Wassers entsprechend reduziert. Über eine Leitung 9 zwischen dem Wärmetauscher 3 und dem Druckgefäß 4, eine Leitung 10, zwischen dem Druckgefäß 4 und der Pumpe 5 und schließlich eine Leitung 11 zwischen der Pumpe 5 und dem Gasgenerator 6 wird das abgekühlte Wasser wieder zurück in den Gasgenerator 6 geführt. Die Heizvorrichtung 1 verfügt weiters über ein Netzgerät 12 zur Versorgung mit elektrischer Energie und über einen Steuervorrichtung 13. Die Abgabe der Wärme durch den Wärmetauscher 3 an die Umgebungsluft kann zusätzlich auch noch durch einen Ventilator 14 reguliert werden. Dazu wird durch einen Temperaturfühler 15 die Temperatur der zuströmenden Luft und durch einen Temperaturfühler 16 die Temperatur der abgeführten und erwärmten Luft gemessen. Aus dem Volumen bzw. der Menge der durch den Wärmetauscher hindurchgeförderten Luft und der Temperaturdifferenz zwischen den beiden Temperaturfühlern 15, 16 kann somit die insgesamt an die Umgebungsluft abgeführte Wärmemenge bestimmt werden. Zur Erfassung der durch die Temperaturfühler 15, 16 gemessenen Temperaturen als auch zur Ansteuerung bzw. Regulierung des Ventilators 14 stehen diese mit der Steuervorrichtung 13 in Verbindung und können die entsprechenden Einstellungen durch diese automatisiert bzw. programmgesteuert erfolgen. In gleicher Weise stehen die Pumpe 5, das Druckgefäß 4 als auch der Gasgenerator 6 mit der Steuervorrichtung 13 in Verbindung. Aus Gründen der besseren Übersicht, sind die entsprechenden Signalleitungen zwischen der Steuervorrichtung 13 und den einzelnen Komponenten der Heizungsvorrichtung 1 in der Fig. 1 nicht eingezeichnet.

Gemäß einem ersten Ausführungsbeispiel ist das Innere des Thermogenerators 2 durch einen offenporigen Sinterwerkstoff 17 bzw. ein Sintermetall erfüllt. Das Brown-Gas wird durch die Leitung 7 in den Thermogenerator 2 zugeführt und erfährt an der sehr großen Oberfläche der inneren Poren des Sinterwerkstoffs 17 eine katalytisch induzierte Rekombination bzw. eine Umwandlung in Wasser. Bei dieser Umwandlung des Wasserstoff-Sauerstoff-Gemischs bzw. des Brown-Gases in Wasser wird Wärme frei, die mit dem entstandenen Wasser als Wärmespeicher bzw. Energieträger über die Leitung 8 in den Wärmetauscher 3 transportiert wird. Vorteilhaft ist dabei, dass die Rekombination des Brown-Gases zu Wasser in dem Sinterwerkstoff 17 vergleichsweise langsam und ohne Flammenbildung vor sich geht.

In einem weiteren Ausführungsbeispiel der Heizungsvorrichtung 1 ist der Thermogenerator 2 durch eine Verbrennungskammer ausgebildet, wobei zwischen der Leitung 7 und dem Thermogenerator 2 eine Flammenrückschlagsicherung (nicht dargestellt) vorgesehen ist. Zur Einleitung des Verbrennungsvorganges in den Thermogenerator 2 ist dieser auch mit einer Zündvorrichtung (nicht dargestellt) ausgestattet.

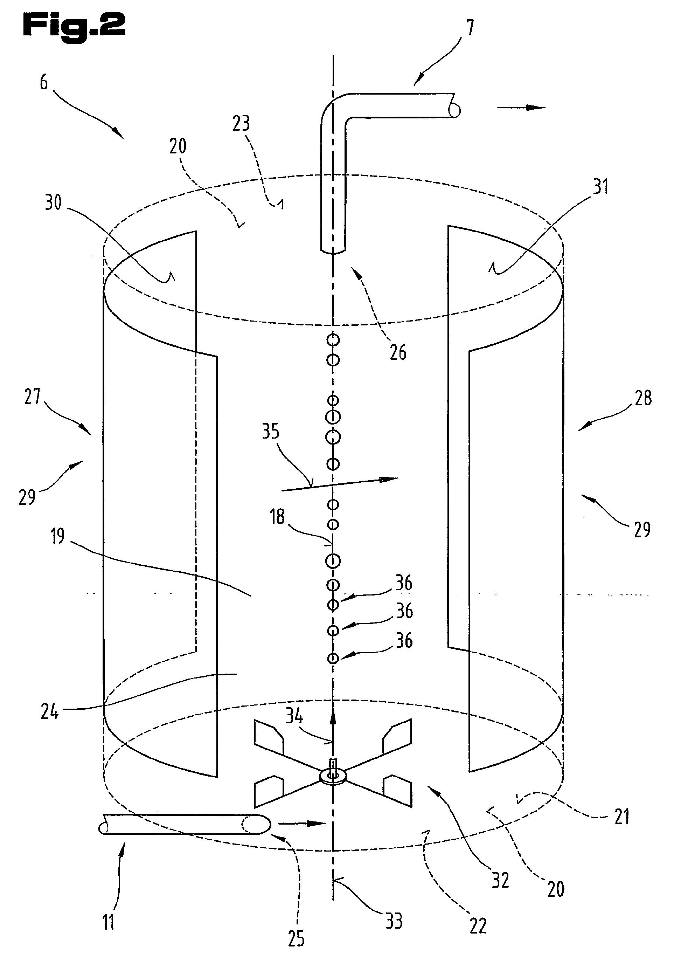

Die Fig. 2 zeigt als Detail der Heizungsvorrichtung 1 den Aufbau des Gasgenerators 6 schematisiert dargestellt.

Das Innere des Gasgenerators 6 wird durch einen bezüglich einer Achse 18 rotationssymmetrisch geformten Reaktionsraum 19 gebildet. Zur besseren Anschaulichkeit sind von diesem Reaktionsraum 19 nur durch strichlierte Linien angedeutete äußere Begrenzungsflächen 20 dargestellt. Gemäß diesem Ausführungsbeispiel ist der Reaktionsraum 19 zylinderförmig ausgebildet und die Begrenzungsflächen 20 werden demgemäss durch einen Mantel 21 und eine kreisscheibenförmige Bodenplatte 22 bzw. eine ebenfalls kreisscheibenförmige Deckplatte 23 gebildet.

Ein im Wesentlichen durch Wasser gebildetes Arbeitsmedium 24 wird durch die Leitung 11 dem Reaktionsraum 19 zugeführt, wobei ein Einlaufstutzen 25 der Leitung 11 bzw. eine Einströmöffnung in den Reaktionsraum 19 bezüglich der Achse 18 tangential ausgerichtet ist. Eine in die Leitung 7 übergehende Ausströmöffnung 26 des Reaktionsraums 19 ist bezüglich der Achse 18 des Reaktionsraums 19 koaxial angeordnet bzw. ausgerichtet. Am Mantel 21 des Reaktionsraums 19 sind zwei als Anode 27 bzw. Kathode 28 ausgebildete Elektroden 29 angeordnet, wobei innere Elektrodenoberflächen 30 bzw. 31 zumindest bereichsweise die Begrenzungsfläche 20 im Bereich des Mantels 21 des Reaktionsraums 19 bilden. D.h. die Begrenzungsfläche 20 im Bereich des Mantels 21 geht stetig in die inneren Elektrodenoberflächen 30 bzw. 31 über und bilden diese Flächen somit gemeinsam eine Zylindermantelfläche. Dadurch wird vermieden, dass es beim Vorbeiströmen des Arbeitsmediums an den Rändern der Elektrodenoberflächen 30 bzw. 31 zu Verwirbelungen des Arbeitsmediums 24 kommt. Das Arbeitsmedium 24 wird nämlich durch einen Rotor 32 in eine Drehbewegung bzw. in Rotation versetzt. Der Rotor 32 ist im Bereich der Bodenplatte22 mit einer Rotationsachse 33, die bezüglich der Achse 18 des Rotationsraums 19 koaxial ausgerichtet ist, angeordnet. Die Drehbewegung des Rotors 32 erfolgt mit einer Winkelgeschwindigkeit 34, deren vektorielle Richtung 34 parallel zur Achse 18 des Reaktionsraums 19 in Richtung auf die Deckplatte 23 ausgerichtet ist. Im Bereich des Mantels 21 erfolgt somit die Bewegung des aus dem Einlaufstutzen 25 tangential einströmenden Arbeitsmediums und die Bewegung des sich in dem Reaktionsraum 19 in Drehbewegung befindlichen Arbeitsmediums in der gleichen Richtung, wodurch vermieden wird, dass es im Bereich des Einlaufstutzens 25 zu Verwirbelungen des Arbeitsmediums kommt. Der Rotor 32 bzw. ein diesen antreibender Motor ist so ausgebildet, dass die Rotation mit einem Betrag der Winkelgeschwindigkeit 34 aus einem Bereich von 10 sec⁻¹ bis 25 sec⁻¹ erfolgt.

Wird durch Anlegen einer elektrischen Spannung an den Elektroden 29 zwischen der Anode 27 und der Kathode 28 ein elektrisches Feld 35 erzeugt, so kommt es zu einer entsprechenden Bewegung, der in dem Arbeitsmedium 24 vorhandenen Ionen und in der Folge an der Anode 27 zur Bildung von molekularem Sauerstoff und an der Kathode 28 zur Bildung von molekularem Wasserstoff. Diese Abscheidung von Sauerstoff bzw. von Wasserstoff findet bei der gewöhnlichen elektrolytischen Aufspaltung von Wasser an den Elektrodenoberflächen 30 bzw. 31 statt. Von der Bildung von Brown-Gas, das eine besondere Form elektrolytisch veränderten Wassers darstellt, ist bekannt, dass dieses in der Mitte zwischen den beiden Elektroden 29 gebildet wird und sich somit in der Form von Blasen 36 im Bereich der Achse 18 des Reaktionsraums 19 ansammelt. Die Blasen 36 des gebildeten Brown-Gases werden, bedingt durch die Rotationsbewegung des Arbeitsmediums 24, im Bereich der Achse 18 des Reaktionsraums 19 konzentriert und steigen andererseits, bedingt durch den Auftrieb in dem Reaktionsraum 19, in Richtung auf die Ausströmöffnung 26 auf und können somit leicht durch die Leitung 7 abgesaugt werden. Durch die mit Hilfe des Rotors 32 erzeugte Drehbewegung des Arbeitsmediums 24 in dem Reaktionsraum 19 wird somit erreicht, dass auf die Blasen 36 des entstehenden Brown-Gases eine Kraftwirkung ausgeübt wird, wodurch diese weiter im Bereich der Achse 18 des Reaktionsraums 19 konzentriert werden und dadurch das gebildete Brown-Gas durch die Ausströmöffnung 26 bzw. die Leitung 7 aus dem Reaktionsraum 19 abgesaugt werden kann. Andererseits wird durch die rotationsförmige Strömung des Arbeitsmediums aber auch erreicht, dass die Diffusionsbewegung der Ionen in Richtung auf die Elektroden 29 hin bzw. entsprechend der Richtung des elektrischen Feldes 35 eine ständige Ablenkbewegung erfährt und somit die Abscheidung von molekularem Sauerstoff bzw. von molekularem Wasserstoff an den Elektroden 29 verhindert bzw. unterdrückt wird, wodurch umgekehrt die Bildung des Brown-Gases in den Blasen 36 begünstigt wird. Die Ausbeute dieses in dem Gasgenerator 6 gebildeten Brown-Gases wird somit deutlich verbessert.

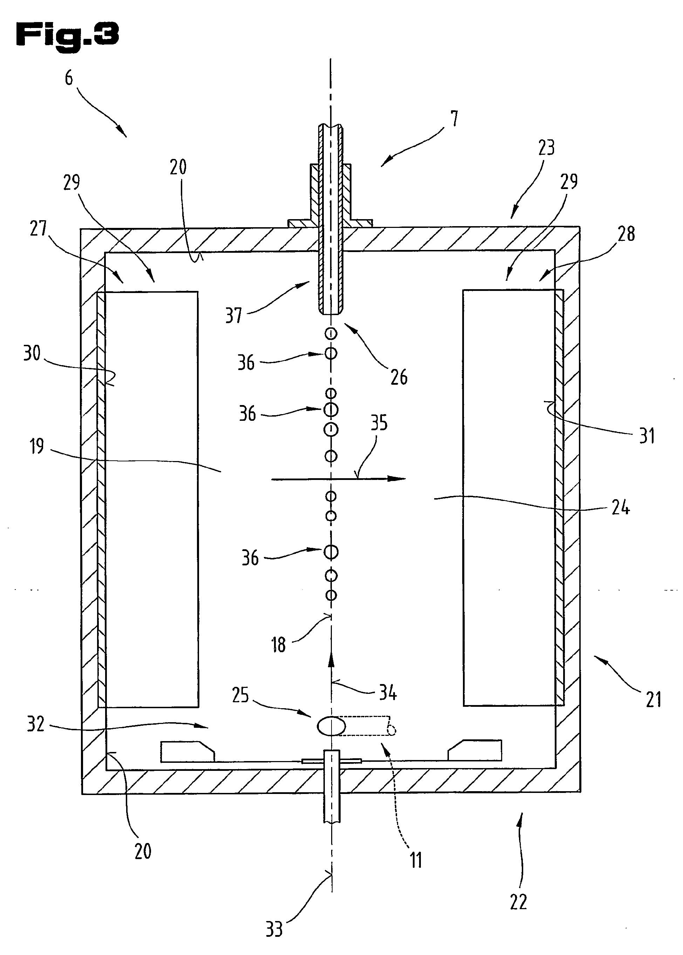

Die Fig. 3 zeigt ein weiteres Ausführungsbeispiel eines Gasgenerators 6 einer Heizungsvorrichtung 1 mit einem zylinderförmigen Reaktionsraum 19.

Die Elektroden 29 sind an der Innenseite des Mantels 21 des Reaktionsraums 19 eingebettet, sodass die inneren Elektrodenoberflächen 30 bzw. 31 mit der inneren Begrenzungsfläche 20 des Reaktionsraums 19 eine zylinderförmige Fläche bilden. Die Bodenplatte 22, die Deckplatte 23 und der Mantel 21, die den Reaktionsraum 19 begrenzen, sind aus einem elektrisch nicht leitenden Material, bevorzugt einem Kunststoff, hergestellt.

Die Ausströmöffnung 26, die sich in die Leitung 7 fortsetzt, ist wiederum koaxial zur Achse 18 des Reaktionsraums 19 im Bereich der Deckplatte 23 angeordnet. Dazu ist nun zusätzlich vorgesehen, dass die Ausströmöffnung 26 im vorderen Endbereich einer Absauglanze 37 ausgebildet ist. Diese Absauglanze 37 ist in Richtung parallel zur Achse 18 des Reaktionsraums 19 verstellbar angeordnet und kann somit in den Reaktionsraum 19 unterschiedlich weit eingeschoben werden. Durch geeignete Einstellung der Absauglanze 37 kann erreicht werden, dass mit den Blasen 36 des Brown-Gases nur ein sehr geringer Anteil des Arbeitsmediums 34 mitabgesaugt wird. Das Arbeitsmedium 24 wird durch den Einlaufstutzen 25, wie bereits ausgeführt worden ist, in den Reaktionsraum 19 eingebracht und wird durch den Rotor 32 in Drehbewegung entsprechend der Winkelgeschwindigkeit 34 versetzt. Unter der gleichzeitigen Wirkung des elektrischen Feldes 35 und der Drehbewegung, entsprechend der Winkelgeschwindigkeit 34, kommt es zur Bildung des Brown-Gases in den Blasen 36, die mit Hilfe der Absauglanze 37 aus dem Bereich der Achse 18 des Reaktionsraums 19 abgesaugt werden.

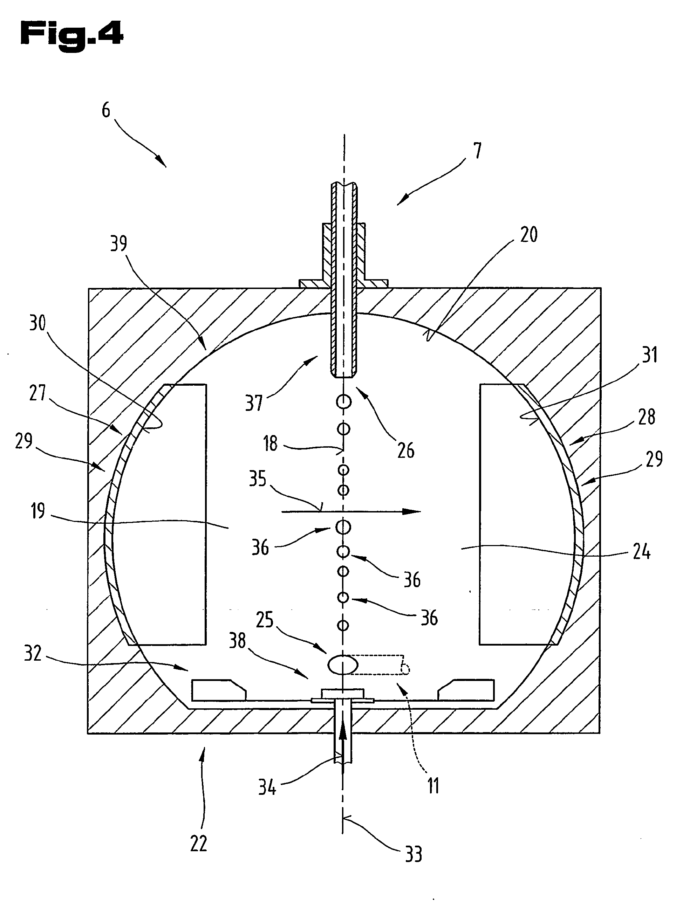

Die Fig. 4 zeigt ein Ausführungsbeispiel des Gasgenerators 6 der Heizungsvorrichtung 1 mit einer in dem Reaktionsraum 19 angeordneten Schallquelle 38.

Die Schallquelle 38 ist koaxial bezüglich der Achse 18 des Reaktionsraums 19 im Bereich der Bodenplatte 22 angeordnet. Gemäß diesem Ausführungsbeispiel ist außerdem vorgesehen, dass die Schallquelle 38 an dem Rotor 32 angebracht ist. Mit dieser Schallquelle 38 wird Ultraschall mit einer Frequenz aus einem Bereich von 25 kHz bis 55 kHz, vorzugsweise von 38, 5 kHz bis 41,5 kHz in den Reaktionsraum 19 eingestrahlt und damit das Arbeitsmedium 24 beaufschlagt. Als günstig erweist sich insbesondere eine Frequenz von 40, 5 kHz. Zusätzlich zur Anordnung der Schallquelle 38 in dem Reaktionsraum 39 sind die inneren Begrenzungsflächen 20 des Reaktionsraums 19 durch eine auch in Richtung parallel zur Achse 18 gekrümmte Fläche bzw. gemäß diesem Ausführungsbeispiel durch eine Kugelfläche gebildet. D.h. es ist zumindest ein Teilbereich der inneren Begrenzungsflächen 20 des Reaktionsraums 19 durch einen, den Schall konzentrierenden Reflektor 39 gebildet. Die inneren Elektrodenoberflächen 30 bzw. 31 stellen somit ebenfalls Teilbereiche des Reflektors 39 dar. Durch den kugelförmig ausgebildeten Reflektor 39 wird in Verbindung mit der im Bereich der Achse 18 angeordneten Schallquelle 38 eine den Schal konzentrierende Wirkung erzielt, wobei es zu einer Erhöhung bzw. Konzentration des Schalldrucks über die Länge der Achse 18 im Bereich des Reaktionsraums 19 kommt. Da der Reflektor 39 nicht parabolisch geformt ist, erfolgt die Schallkonzentration nicht in einem einzelnen Punkt bzw. Brennpunkt sondern über einen ausgedehnten Längenbereich der Achse 18 in dem Reaktionsraum 19. Dieser Längenbereich der Achse 18 ist aber auch der Bereich, indem die Bildung des Brown-Gases in den Blasen 36 beobachtet werden kann. Es zeigt sich, dass durch die Beaufschlagung des Arbeitsmediums 24 bzw. des Bereichs der Entstehung der Blasen 36 des Brown-Gases in der Umgebung der Achse 18 mit Ultraschall eine deutliche Verstärkung der Bildung des Brown-Gases erreicht werden kann.

Es ist zwar nicht unbedingt erforderlich, die Schallquelle 38 an dem Rotor 32 anzubringen und mit diesem mitzurotieren, dies hat aber andererseits den Vorteil, dass bei einer nicht rotationssymmetrischen Abstrahlungscharakteristik der Schallquelle 38 bezüglich der Achse 18 durch die Drehbewegung mit dem Rotor 32 eine zeitliche Mittelung bzw. Gleichverteilung der räumlichen Verteilung des Schalldruckes über jeweils eine Umdrehung des Rotors 32 hinweg erfolgt.

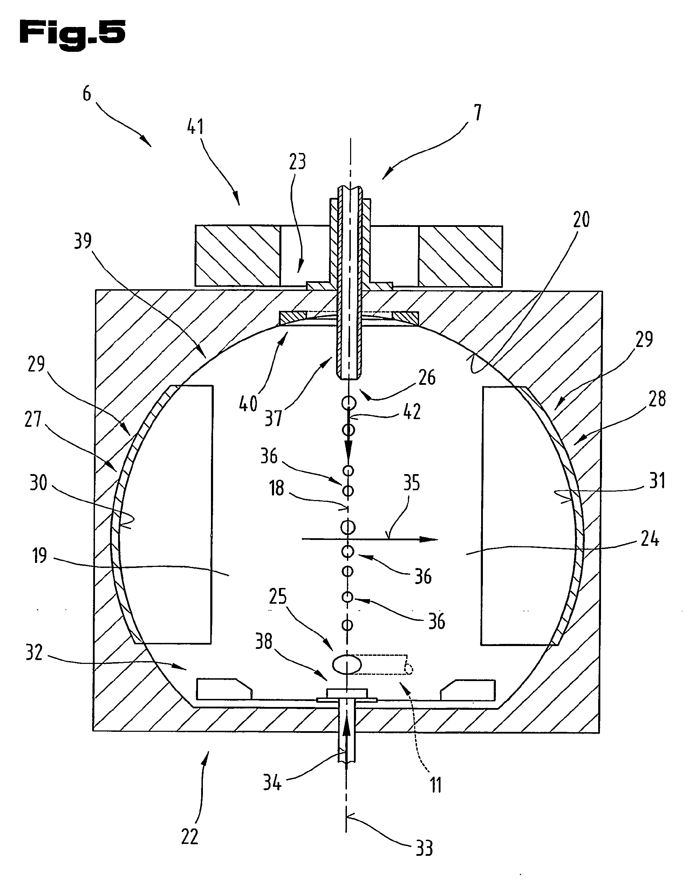

Fig. 5 zeigt ein weiteres Ausführungsbeispiel des Gasgenerators 6 der Heizungsvorrichtung 1 mit einer Infrarotquelle 40 und einem Magneten 41.

Die Infrarotquelle 40 ist im Bereich der Deckplatte 23 versenkt in die Begrenzungsfläche 20 angebracht und strahlt Infrarotstrahlung in den Bereich des Reaktionsraums 19 ein. Es zeigt sich, dass durch das Beaufschlagen des Arbeitsmediums 24 mit Infrarotstrahlung ebenfalls eine positive Beeinflussung der Bildung des Brown-Gases in den Blasen 36 bewirkt wird und damit die Bildung des Brown-Gases beschleunigt werden kann. Die Stelle, an der die Infrarotquelle in dem Reaktionsraum 19 angeordnet ist, ist für deren Wirkung nicht entscheidend. Wesentlich ist die Beaufschlagung des Arbeitsmediums 24 mit der Infrarotstrahlung als solcher.

Der Magnet 41 ist ebenfalls im Bereich der Deckplatte 43 angeordnet, wobei dieser so ausgerichtet ist, dass die magnetische Induktion 42 im Bereich der Achse 18 des Reaktionsraums 19 antiparallel bezüglich der Winkelgeschwindigkeit 34 bzw. bezüglich deren Richtung ausgerichtet ist. Unter der gemeinsamen der Wirkung der durch den Rotor 32 hervorgerufenen Rotation des Arbeitsmediums 24 und dem elektrischen Feld 35 werden Ionen des Arbeitsmediums 24 annähernd in Kreisbahnen geführt. Entsprechend der Kraft, die auf in Magnetfeldern bewegte Ladungen durch das Magnetfeld ausgeübt wird, bewirkt die antiparallel bezüglich der Winkelgeschwindigkeit 34 ausgerichtete magnetische Induktion nun eine zusätzliche Kraft, die annähernd in Richtung auf die Achse 18 des Reaktionsraums 19 weist. Durch diese zusätzliche Kraftwirkung werden die Ionen in dem Arbeitsmedium 24 auf spiralförmige Bahnen gezwungen, die sich immer weiter der Achse 18 des Reaktionsraums 19 annähern. Durch die Kraftwirkung des Magneten 41 wird somit verhindert, dass die Ionen des Arbeitsmediums 24 an die Anode 27 bzw. an die Kathode 28 gelangen können und dort zur Bildung von molekularem Sauerstoff bzw. molekularem Wasserstoff führen und wird andererseits bewirkt, dass die Ionen im Bereich um die Achse 18 konzentriert werden und dort die Bildung des Brown-Gases in den Blasen 36 intensiviert wird.

Mit der Heizungsvorrichtung 1 kann somit ein Verfahren zur Erzeugung von Wärme mit Brown-Gas durchgeführt werden. Dazu wird zunächst das Arbeitsmedium 24 bzw. das Wasser in einem bezüglich einer Achse 18 rotationssymmetrisch geformten Reaktionsraum 19 geleitet, ein elektrisches Feld 35 angelegt, wobei die elektrische Feldrichtung senkrecht bezüglich der Achse 18 des Reaktionsraums 19 ausgerichtet ist und das Arbeitsmedium 24 bzw. das Wasser in Rotation versetzt. Die Rotationsachse des Wassers ist bezüglich der Achse 18 des Reaktionsraums 19 koaxial ausgerichtet. D.h. andererseits, dass die Richtung des elektrischen Feldes 35 senkrecht bezüglich der Rotationsachse des Wassers gerichtet ist. In einem weiteren Schritt wird das unter dem Einfluss des elektrischen Feldes 35 und der Rotation in dem Reaktionsraum 19 aus dem Arbeitsmedium 24 bzw. dem Wasser gebildete Brown-Gas aus dem Reaktionsraum 19 abgeleitet und dieses anschließend in einem Thermogenerator 2 zu Wasser rekombiniert, wobei durch diesen exothermen Prozess Wärme abgegeben wird. Das in dem Thermogenerator 2 gebildete Wasser wird vorzugsweise auch als Transportmedium für die Wärme verwendet und somit die entstandene Wärme mit diesem Wasser bzw. Arbeitsmedium 24 in den Wärmetauscher 3 transportiert. Aus dem Wärmetauscher 3 gelangt das Arbeitsmedium 24 bzw. das Wasser über das Druckgefäß 4 und die Pumpe 5 wieder zurück in den Gasgenerator 6, wo es erneut zur Bildung von Brown-Gas zur Verfügung steht. Das Arbeitsmedium 24 bzw. das Wasser wird somit in einem geschlossenen Kreislauf geführt.

Mit Hilfe des Druckgefäßes 4 kann der Druck des Arbeitsmediums 24 in dem Kreislauf reguliert werden. Die Strömungsgeschwindigkeit des Arbeitsmediums 24 in dem Kreislauf wird durch die Pumpe 5 bestimmt, wobei diese entsprechen der Bildungsrate des Brown-Gases reguliert wird. Die Pumpenleistung wird gerade so eingestellt, dass möglichst nur das entstandene Brown-Gas durch die Leitung 7 aus dem Gasgenerator 6 abgeleitet wird. Der Anteil von Arbeitsmedium 24, das mit dem Brown-Gas in die Leitung gelangt, wird so möglichst gering gehalten. Die Einstellung der verschiedenen Parameter des Betriebszustandes der Heizungsvorrichtung 1 erfolgt vorzugsweise programmgesteuert durch die Steuervorrichtung 13.

Der Vorgang der Bildung des Brown-Gases in dem Gasgenerator 6 der Heizungsvorrichtung 1 erfolgt bevorzugt unter der zusätzlichen Einwirkung von Schallenergie, die in der Form von Ultraschall durch eine Schallquelle 38 auf das Arbeitsmedium 24 einwirkt. Bevorzugt ist auch noch vorgesehen, dass die Bildung des Brown-Gases unter der Einwirkung eines Magnetfeldes eines Magneten 41 bzw. von Infrarotstrahlung einer Infrarotquelle 40 erfolgt. Die Einstellung des Schalldrucks der Schallquelle 38 als auch die Intensität der Infrarotstrahlung der Infrarotquelle 40 und der magnetischen Induktion 42 des Magneten 41 erfolgt vorzugsweise programmgesteuert durch die Steuervorrichtung 13.

Es wurde außerdem gefunden, dass der Wirkungsgrad des Verfahrens zur Erzeugung von Wärme mit Brown-Gas dadurch erhöht wird, dass der Druck des Arbeitsmediums 24 in dem Kreislauf als auch die Schallintensität der Schallquelle 38 zeitlich zwischen einem Minimalwert und einem Maximalwert auf- und abschwellend, d.h. periodisch, verändert werden, wobei die Veränderung des Drucks antizyklisch zur Veränderung der Schallintensität verläuft. Die zeitliche Veränderung dieses Auf- und Abschwellens der Werte des Druckes und der Schallintensität kann dabei relativ langsam erfolgen, und liegt der Wert der Frequenz dieser Veränderung in einem Bereich zwischen 0,1 Hz und 10 Hz.

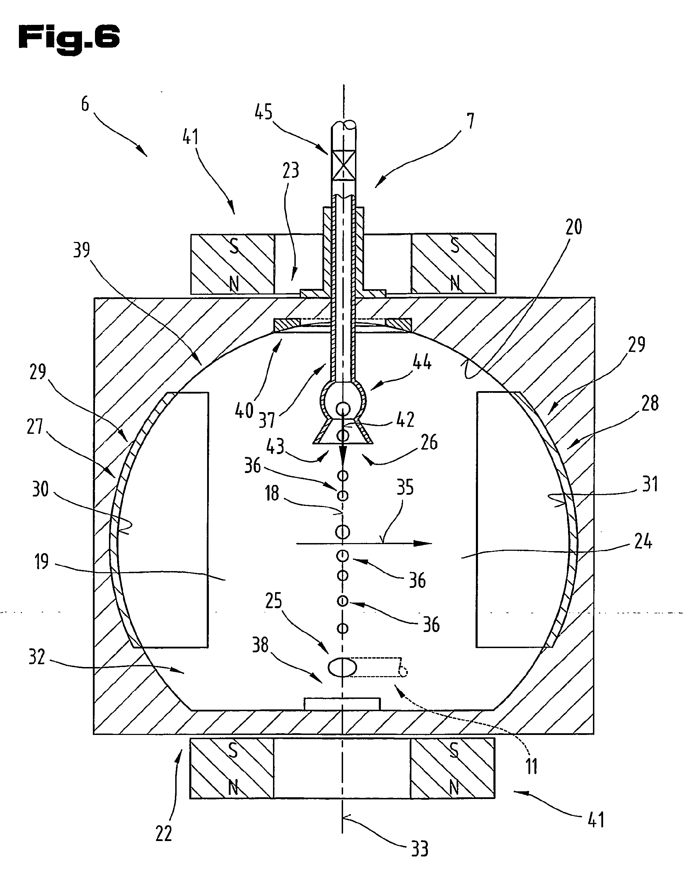

Die Fig. 6 zeigt ein weiteres Ausführungsbeispiel eines Gasgenerators 6.

Die innere Begrenzungsfläche 20 des Reaktionsraums 19 als auch die Elektrodenoberflächen 30 und 31 bilden gemeinsam eine Innenseite einer Kugeloberfläche, die auf den von der Schaltwelle 38 erzeugten Schall konzentrierend wirken. D.h. die Begrenzungsoberfläche 20 und die Elektrodenoberflächen 30 und 31 bilden gemeinsam den Reflektor 39 zur Konzentration der Schallenergie im Bereich der Achse 18 des Reaktionsraums 19. Durch den Einlaufstutzen 25 der tangential zur Begrenzungsfläche 20 und senkrecht zur Achse 18 des Reaktionsraums ausgerichtet ist, strömt Wasser in den Reaktionsraum 9 ein. Durch die somit vorgegebene Einströmrichtung durch den Einlaufstutzen 25 wird das in dem Reaktionsraum 19 befindliche Wasser bzw. Arbeitsmedium in eine Drehbewegung versetzt, die um die Achse 18 des Reaktionsraums 19 als dessen Drehachse erfolgt. Ein gesonderter Rotor zur Erzeugung der Drehbewegung ist in diesem Fall also nicht vorgegeben, der Impuls des einströmenden Arbeitsmediums ist dazu ausreichend.

Die Ausströmöffnung 26 der Absauglanze 37 ist in diesem Ausführungsbeispiel des Gasgenerators 6 durch einen Absaugtrichter 43 gebildet. Anschließend an diesen Absaugtrichter 43 ist die Absauglanze 37 auch mit einer Phasentrenneinrichtung 44 ausgestattet. Durch diese Phasentrenneinrichtung 44 wird erreicht, dass das flüssige Arbeitsmedium von dem mit den Blasen 36 aufsteigenden Wasserstoff-Sauerstoff-Gemisch bzw. Brown-Gas getrennt wird und so in dem Reaktionsraum 19 zurückgehalten wird. In der auf die Absauglanze 37 anschlie-βenden Leitung 7 ist weiters ein Drosselventil bzw. ein Ventil 45 vorgesehen. Durch Anordnung des Ventils 45 in der Leitung 7 und der Pumpe 5 (siehe Fig. 1) in der Leitung 11 bildet der Reaktionsraum 19 gleichzeitig auch ein Druckgefäß, indem das Drosselventil bzw. das Ventil 45 dem Arbeitsmedium bzw. dem abströmenden Gas gegen den durch die Pumpe 5 aufgebauten Druck einen entsprechenden Widerstand entgegensetzt.

Durch das Zusammenwirken des elektrischen Feldes 35 und der im Reaktionsraum 19 erfolgenden Drehbewegung des Arbeitsmediums kommt es im Bereich der Achse 18 des Reaktionsraums 19 zur Bildung eines Wasserstoff-Sauerstoff-Gemisches bzw. von Brown-Gas. Die Bildungsrate dieses Gases in dem Gasgenerator kann zusätzlich noch durch die Einwirkung der Schallquelle 38 der Infrarotquelle 40 und der Magneten 41 erhöht werden. Gemäß diesem Ausführungsbeispiel ist vorgesehen, dass sowohl im Bereich der Deckplatte 23 als auch im Bereich der Bodenplatte 22 ein Magnet 41 angeordnet ist, wodurch erreicht wird, dass das magnetische Feld bzw. die magnetische Induktion 42 im Bereich der Achse 18 des Reaktionsraums 19 einen homogeneren Verlauf aufweist.

Der Gasgenerator 6 ist gemäß diesem Beispiel Bestandteil einer Vorrichtung zur Umwandlung von Energie, wobei das Arbeitsmedium bzw. Wasser in diesem Fall nicht in einem geschlossen Kreislauf geführt wird. Das vom Gasgenerator 6 erzeugte Wasserstoff-Sauerstoff-Gemisch bzw. Brown-Gas wird zum Schweißen verwendet. Anschließend an die Verbrennung des Wasserstoff-Sauerstoff-Gemischs bzw. Brown-Gases in der Flamme des Schweißbrenners wird der gebildete Wasserdampf an die Umgebung abgegeben.

### Bezugszeichenaufstellung

- 1: Heizungsvorrichtung
- 2: Thermogenerator
- 3: Wärmetauscher
- 4: Druckgefäß
- 5: Pumpe

- 6: Gasgenerator
- 7: Leitung
- 8: Leitung
- 9: Leitung
- 10: Leitung

- 11: Leitung
- 12: Netzgerät
- 13: Steuervorrichtung
- 14: Ventilator
- 15: Temperaturfühler

- 16: Temperaturfühler
- 17: Sinterwerkstoff
- 18: Achse
- 19: Reaktionsraum
- 20: Begrenzungsfläche

- 21: Mantel
- 22: Bodenplatte
- 23: Deckplatte
- 24: Arbeitsmedium
- 25: Einlaufstutzen

- 26: Ausströmöffnung
- 27: Anode
- 28: Kathode
- 29: Elektrode
- 30: Elektrodenoberfläche

- 31: Elektrodenoberfläche
- 32: Rotor
- 33: Rotationsachse
- 34: Winkelgeschwindigkeit
- 35: elektrisches Feld

- 36: Blase
- 37: Absauglanze
- 38: Schallquelle
- 39: Reflektor
- 40: Infrarotquelle

- 41: Magnet
- 42: Induktion
- 43: Absaugtrichter
- 44: Phasentrenneinrichtung
- 45: Ventil

## Patentansprüche

1. Vorrichtung zur Umwandlung von Energie mit einem Gasgenerator (6) zur Erzeugung eines Wasserstoff-Sauerstoff-Gemisch bzw. von Brown-Gas mit einem Reaktionsraum (19), in dem Elektroden (29) angeordnet sind, wobei der Reaktionsraum (19) bezüglich einer Achse (18) rotationssymmetrisch geformt ist und innere Begrenzungsflächen (20) des Reaktionsraums (19) im Bereich eines Mantels (21) des Reaktionsraums (19) zumindest bereichsweise durch innere Elektrodenoberflächen (30, 31) der Elektroden (29) des Gasgenerators (6) gebildet sind, **dadurch gekennzeichnet, dass** in dem Gasgenerator (6) ein Rotor (32) mit einer Rotationsachse (33) ausgebildet ist, wobei die Rotationsachse (33) bezüglich der Achse (18) des Reaktionsraums (19) koaxial ausgerichtet ist.

2. Vorrichtung nach Anspruch 1, **dadurch gekennzeichnet, dass** zumindest ein tangential zum Mantel (21) des Reaktionsraums (19) ausgerichteter Einlaufstutzen (25) für ein Arbeitsmedium (24) in dem Mantel (21) ausgebildet ist.

3. Vorrichtung nach Anspruch 2, **dadurch gekennzeichnet, dass** der Rotor (32) zur Erzeugung einer Rotation mit einem Betrag einer Winkelgeschwindigkeit (34) aus einem Bereich von 10 s⁻¹ bis 25 s⁻¹ ausgebildet ist.

4. Vorrichtung nach einem der vorhergehenden Ansprüche, **dadurch gekennzeichnet, dass** in einer den Reaktionsraum (19) abschließenden Bodenplatte (22) und/oder Deckplatte (23) eine Ausströmöffnung (26) ausgebildet ist, wobei die Ausströmöffnung (26) bezüglich der Achse (18) des Reaktionsraums (19) koaxial angeordnet ist.

5. Vorrichtung nach Anspruch 4, **dadurch gekennzeichnet, dass** die Ausströmöffnung (26) durch eine parallel zur Richtung der Achse (18) des Reaktionsraums (19) verstellbare Absauglanze (37) ausgebildet ist.

6. Vorrichtung nach Anspruch 4 oder 5, **dadurch gekennzeichnet, dass** die Ausströmöffnung (26) durch einen Absaugtrichter (43) gebildet ist.

7. Vorrichtung nach Anspruch 5 oder 6, **dadurch gekennzeichnet, dass** in der Absauglanze (37) eine Phasentrenneinrichtung (44) angeordnet ist.

8. Vorrichtung nach einem der Ansprüche 4 bis 7, **dadurch gekennzeichnet, dass** in einer an die Ausströmöffnung (26) anschließenden Leitung (7) ein Drosselventil bzw. ein Ventil (45) angeordnet und der Reaktionsraum (19) als Druckgefäß ausgebildet ist.

9. Vorrichtung nach einem der vorhergehenden Ansprüche, **dadurch gekennzeichnet, dass** der Gasgenerator (6) mit einer Schallquelle (38) ausgebildet ist.

10. Vorrichtung nach Anspruch 9, **dadurch gekennzeichnet, dass** die Schallquelle (38) zur Erzeugung von Schall mit einer Frequenz aus einem Bereich von 25 kHz bis 55 kHz, vorzugsweise von 38,5 kHz bis 41,5 kHz, bevorzugt 40,5 kHz, ausgebildet ist.

11. Vorrichtung nach Anspruch 9 oder 10, **dadurch gekennzeichnet, dass** die Schallquelle (38) bezüglich der Achse (18) des Reaktionsraums (19) koaxial ausgerichtet ist.

12. Vorrichtung nach einem der Ansprüche 9 bis 11, **dadurch gekennzeichnet, dass** zumindest ein Teilbereich der inneren Begrenzungsfläche (20) des Reaktionsraums (19) als ein den Schall konzentrierender Reflektor (39) geformt ist.

13. Vorrichtung nach einem der vorhergehenden Ansprüche, **dadurch gekennzeichnet, dass** der Gasgenerator (6) mit einer IR-Quelle ausgebildet ist.

14. Vorrichtung nach einem der vorhergehenden Ansprüche, **dadurch gekennzeichnet, dass** der Gasgenerator (6) mit einem Magneten (41) ausgebildet ist.

15. Vorrichtung nach Anspruch 14, **dadurch gekennzeichnet, dass** eine Magnetfeldrichtung des Magneten im Bereich der Achse (18) des Reaktionsraums (19) bezüglich einer Richtung einer Winkelgeschwindigkeit (34) des Rotors (32) antiparallel ausgerichtet ist.

16. Vorrichtung nach einem der vorhergehenden Ansprüche, **dadurch gekennzeichnet, dass** ein Druckgefäß (4) für das Arbeitsmedium (24) ausgebildet ist.

17. Vorrichtung nach einem der vorhergehenden Ansprüche, **dadurch gekennzeichnet, dass** diese als Heizungsvorrichtung (1) mit einem Thermogenerator (2) ausgebildet ist, wobei ein Innenraum des Thermogenerators (2) mit einem Sinterwerkstoff (17) ausgebildet ist.

18. Vorrichtung nach Anspruch 17, **dadurch gekennzeichnet, dass** der Gasgenerator (6), der Thermogenerator (2), ein Wärmetauscher (3), das Druckgefäß (4) und eine Pumpe (5) zu einem geschlossenen Kreislauf für das Arbeitsmedium (24) miteinander verbunden sind.

19. Vorrichtung nach Anspruch 18, **dadurch gekennzeichnet, dass** an dem Wärmetauscher (3) ein Ventilator (14) zur Abfuhr von Wärme von dem Wärmetauscher (3) angeordnet ist.

20. Vorrichtung nach einem der vorhergehenden Ansprüche, **dadurch gekennzeichnet, dass** eine Steuervorrichtung (13) zur Steuerung des Betriebszustands ausgebildet ist.

21. Vorrichtung nach Anspruch 20, **dadurch gekennzeichnet, dass** die Steuervorrichtung (13) zur automatisierten Steuerung ausgebildet ist.

22. Verfahren zur Umwandlung von Energie unter Verwendung eines Wasserstoff-Sauerstoff-Gemisch bzw. von Brown-Gas, wobei ein Arbeitsmedium (24) bzw. Wasser in einen bezüglich einer Achse (18) rotationssymmetrisch geformten Reaktionsraum (19) geleitet wird und ein elektrisches Feld (35) zwischen Elektroden (29) angelegt wird, wobei eine elektrische Feldrichtung senkrecht bezüglich der Achse (18) des Reaktions-raums (19) ausgerichtet ist und das im Bereich der Achse (18) des Reaktionsraums (19) gebildete Wasserstoff-Sauerstoff-Gemisch bzw. Brown-Gas aus dem Reaktionsraum (19) abgeleitet wird und das Wasserstoff-Sauerstoff-Gemisch bzw. das Brown-Gas zu Wasser rekombiniert wird, **dadurch gekennzeichnet, dass** das Wasser im Reaktionsraum in Rotation versetzt wird, wobei eine Rotations-achse (33) des Wassers bezüglich der Achse (18) des Reaktionsraums (19) koaxial ausgerich-tet ist.

23. Verfahren nach Anspruch 22, **dadurch gekennzeichnet, dass** das Wasser und/oder das Brown-Gas in dem Reaktionsraum (19) mit einem Magnetfeld beaufschlagt wird, wobei eine magnetische Induktion (42) im Bereich der Achse (18) des Reaktionsraums (19) antiparallel bezüglich der Richtung der Winkelgeschwindigkeit (34) ausgerichtet ist.

24. Verfahren nach Anspruch 22 oder 23, **dadurch gekennzeichnet, dass** das Wasser und/oder das Brown-Gas in dem Reaktionsraum (19) mit Schallenergie beaufschlagt wird.

25. Verfahren nach einem der Ansprüche 22 bis 24, **dadurch gekennzeichnet, dass** das Wasser und/oder das Brown-Gas in dem Reaktionsraum (19) mit IR-Strahlung beaufschlagt wird.

26. Verfahren nach einem der Ansprüche 22 bis 25, **dadurch gekennzeichnet, dass** das Wasser und das Brown-Gas in einem geschlossenen Kreislauf befördert werden.

27. Verfahren nach einem der Ansprüche 22 bis 26, **dadurch gekennzeichnet, dass** eine Winkelgeschwindigkeit (34) der Rotation des Wassers in dem Reaktionsraum (19) periodisch verändert wird.

28. Verfahren nach einem der Ansprüche 22 bis 27, **dadurch gekennzeichnet, dass** ein Druck des Arbeitsmediums (24) in dem Kreislauf periodisch verändert wird.

29. Verfahren nach einem der Ansprüche 22 bis 28, **dadurch gekennzeichnet, dass** eine Schallintensität einer Schallquelle (38) in dem Reaktionsraum (19) periodisch verändert wird.

30. Verfahren nach Anspruch 29, **dadurch gekennzeichnet, dass** die periodische Veränderung des Drucks des Arbeitsmediums (24) bezüglich der periodischen Veränderung der Schallintensität der Schallquelle (38) in Gegenphase erfolgt.

31. Verfahren nach einem der Ansprüche 22 bis 30, **dadurch gekennzeichnet, dass** der Wert einer Frequenz der periodischen Veränderung des Drucks des Arbeitsmediums (24) und/oder der Schallintensität der Schallquelle (38) und/oder der Winkelgeschwindigkeit (34) aus einem Bereich zwischen 0,1 Hz und 10 Hz gewählt ist.

32. Verfahren nach einem der Ansprüche 22 bis 31, **dadurch gekennzeichnet, dass** die Rekombination des Wasserstoff-Sauerstoff-Gemisches bzw. das Brown-Gases in einem Thermogenerator (2) erfolgt, wobei die dabei gebildete Wärme mit dem Wasser abgeführt wird.

33. Verfahren nach Anspruch 32, **dadurch gekennzeichnet, dass** das Brown-Gas in dem Thermogenerator (2) durch einen Sinterwerkstoff (17) hindurchgeleitet wird.

## Claims

1. Device for converting energy comprising a gas generator (6) for generating a hydrogen-oxygen mixture or Brown's gas with a reaction chamber (19), in which electrodes (29) are disposed, which reaction chamber (19) is of a rotationally symmetrical shape with respect to an axis (18), and at least certain regions of the inner boundary surfaces (20) of the reaction chamber (19) in the region of a jacket (21) of the reaction chamber (19) are formed by inner electrode surfaces (30, 31) of the electrodes (29) of the gas generator (6), **characterised in that** a rotor (32) with a rotation axis (33) is provided in the gas generator (6) and the rotation axis (33) is oriented coaxially with the axis (18) of the reaction chamber (19).

2. Device as claimed in claim 1, **characterised in that** at least one inlet connector (25) for a working medium (24) is provided in the jacket (21), oriented at a tangent with respect to the jacket (21) of the reaction chamber (19).

3. Device as claimed in claim 2, **characterised in that** the rotor (32) is designed to generate a rotation with an angular velocity (34) in a range of from 10 s⁻¹ to 25 s⁻¹.

4. Device as claimed in one of the preceding claims, **characterised in that** an outlet orifice (26) is provided in a base plate (22) and/or cover plate (23) closing off the reaction chamber (19) and the outlet orifice (26) is disposed coaxially with the axis (18) of the reaction chamber (19).

5. Device as claimed in claim 4, **characterised in that** the outlet orifice (26) is provided in the form of a suction lance (37) which is displaceable parallel with the direction of the axis (18) of the reaction chamber (19).

6. Device as claimed in claim 4 or 5, **characterised in that** the outlet orifice (26) is provided in the form of a suction funnel (43).

7. Device as claimed in claim 5 or 6, **characterised in that** a phase separation device (44) is provided in the suction lance (37).

8. Device as claimed in one of claims 4 to 7, **characterised in that** a throttle valve or a valve (45) is disposed in a line (7) connected to the outlet orifice (26) and the reaction chamber (19) is provided in the form of a pressure vessel.

9. Device as claimed in one of the preceding claims, **characterised in that** the gas generator (6) is provided with an acoustic source (38).

10. Device as claimed in claim 9, **characterised in that** the acoustic source (38) is designed to generate sound at a frequency in a range of from 25 kHz to 55 kHz, preferably from 38.5 kHz to 41.5 kHz, more preferably 40.5 kHz.

11. Device as claimed in claim 9 or 10, **characterised in that** the acoustic source (38) is oriented coaxially with the axis (18) of the reaction chamber (19).

12. Device as claimed in one of claims 9 to 11, **characterised in that** at least a part-region of the inner boundary surface (20) of the reaction chamber (19) is shaped as a reflector (39) for concentrating the sound.

13. Device as claimed in one of the preceding claims, **characterised in that** the gas generator (6) is provided with an IR source.

14. Device as claimed in one of the preceding claims, **characterised in that** the gas generator (6) is provided with a magnet (41).

15. Device as claimed in claim 14, **characterised in that** a magnetic field direction of the magnet in the region of the axis (18) of the reaction chamber (19) is oriented anti-parallel with respect to a direction of an angular velocity (34) of the rotor (32).

16. Device as claimed in one of the preceding claims, **characterised in that** a pressure vessel (4) is provided for the working medium (24).

17. Device as claimed in one of the preceding claims, **characterised in that** it is designed as a heating device (1) with a heat generator (2) and an interior of the heat generator (2) is provided with a sintered material (17).

18. Device as claimed in claim 17, **characterised in that** the gas generator (6), the heat generator (2), a heat exchanger (3), the pressure vessel (4) and a pump (5) are connected to one another to form a closed circuit for the working medium (24).

19. Device as claimed in claim 18, **characterised in that** a fan (14) is provided on the heat exchanger (3) for feeding heat away from the heat exchanger (3).

20. Device as claimed in one of the preceding claims, **characterised in that** a control system (13) is provided for controlling the operating mode.

21. Device as claimed in claim 20, **characterised in that** the control system (13) is designed to run an automatic control.

22. Method of converting energy using a hydrogen-oxygen mixture or Brown's gas, whereby a working medium (24) or water is fed into a reaction chamber (19) of a rotationally symmetrical shape with respect to an axis (18), and an electric field (35) is applied between electrodes (29), and an electric field direction is oriented perpendicular to the axis (18) of the reaction chamber (19) and the hydrogen-oxygen mixture or Brown's gas formed in the region of the axis (18) of the reaction chamber (19) is fed out of the reaction chamber (19) and the hydrogen-oxygen mixture or Brown's gas is recombined to form water **characterised in that** and the water is displaced in rotation, and a rotation axis (33) of the water is oriented coaxially with the axis (18) of the reaction chamber (19).

23. Method as claimed in claim 22, **characterised in that** the water and/or Brown's gas in the reaction chamber (19) is exposed to a magnetic field, and a magnetic induction (42) in the region of the axis (18) of the reaction chamber (19) is oriented anti-parallel with respect to the direction of the angular velocity (34).

24. Method as claimed in claim 22 or 23, **characterised in that** the water and/or Brown's gas is exposed to acoustic energy in the reaction chamber (19).

25. Method as claimed in one of claims 22 to 24, **characterised in that** the water and/or Brown's gas is exposed to IR radiation in the reaction chamber (19).

26. Method as claimed in one of claims 22 to 25, **characterised in that** the water and Brown's gas are conveyed in a closed circuit.

27. Method as claimed in one of claims 22 to 26, **characterised in that** an angular velocity (34) of the rotation of the water in the reaction chamber (19) is periodically varied.

28. Method as claimed in one of claims 22 to 27, **characterised in that** a pressure of the working medium (24) in the circuit is periodically varied.

29. Method as claimed in one of claims 22 to 28, **characterised in that** an acoustic intensity of an acoustic source (38) in the reaction chamber (19) is periodically varied.

30. Method as claimed in claim 29, **characterised in that** the periodic variation in the pressure of the working medium (24) takes place in an opposite phase from the periodic variation of the acoustic intensity of the acoustic source (38).

31. Method as claimed in one of claims 22 to 30, **characterised in that** the value of a frequency of the periodic variation in the pressure of the working medium (24) and/or the acoustic intensity of the acoustic source (38) and/or the angular velocity (34) is selected from a range of between 0.1 Hz and 10 Hz.

32. Method as claimed in one of claims 22 to 31, **characterised in that** the recombination of the hydrogen-oxygen mixture or Brown's gas takes place in a heat generator (2) and the heat generated as a result is fed away with the water.

33. Method as claimed in claim 32, **characterised in that** the Brown's gas is fed through a sintered material (17) in the heat generator (2).

## Revendications

1. Dispositif pour la transformation de l'énergie, comportant un générateur de gaz (6) pour produire un mélange d'hydrogène et d'oxygène ou du gaz de Brown, avec une chambre de réaction (19), dans laquelle sont disposées des électrodes (29), la chambre de réaction (19) étant réalisée avec une symétrie de révolution par rapport à un axe (18), et des surfaces de délimitation (20) intérieures de la chambre de réaction (19) dans la zone d'une surface externe (21) de la chambre de réaction (19) sont formées au moins dans certaines zones par les surfaces intérieures (30, 31) des électrodes (29) du générateur de gaz (6), **caractérisé en ce qu'**un rotor (32) avec un axe de rotation (33) est réalisé dans le générateur de gaz (6), ledit axe de rotation (33) étant aligné coaxialement à l'axe (18) de la chambre de réaction (19).

2. Dispositif selon la revendication 1, **caractérisé en ce qu'**au moins une tubulure d'admission (25), orientée tangentiellement à la surface externe (21) de la chambre de réaction (19), est réalisée pour un fluide de travail dans la surface externe (21).

3. Dispositif selon la revendication 2, **caractérisé en ce que** le rotor (32) est réalisé pour générer une rotation avec une vitesse angulaire (34) avec une valeur choisie dans une plage de 10 s⁻¹ à 25 s⁻¹.

4. Dispositif selon l'une quelconque des revendications précédentes, **caractérisé en ce qu'**un orifice d'évacuation (26) est réalisé dans une plaque de fond (22), fermant la chambre de réaction (19), et/ou dans une plaque supérieure (23), ledit orifice d'évacuation (26) étant agencé coaxialement à l'axe (18) de la chambre de réaction (19).

5. Dispositif selon la revendication 4, **caractérisé en ce que** l'orifice d'évacuation (26) est formé par un tuyau d'aspiration (37), réglable parallèlement à l'axe (18) de la chambre de réaction (19).

6. Dispositif selon la revendication 4 ou 5, **caractérisé en ce que** l'orifice d'évacuation (26) est formé par un cône d'aspiration (43).

7. Dispositif selon la revendication 5 ou 6, **caractérisé en ce qu'**un dispositif de séparation de phases (44) est agencé dans le tuyau d'aspiration (37).

8. Dispositif selon l'une quelconque des revendications 4 à 7, **caractérisé en ce qu'**un clapet d'étranglement ou une vanne (45) est agencé dans une conduite (7) raccordée à l'orifice d'évacuation (26), et la chambre de réaction (19) est réalisée sous la forme d'un réservoir sous pression.

9. Dispositif selon l'une quelconque des revendications précédentes, **caractérisé en ce que** le générateur de gaz (6) est réalisé avec une source sonore (38).

10. Dispositif selon la revendication 9, **caractérisé en ce que** la source sonore (38) est réalisée pour générer un son avec une fréquence choisie dans une plage de 25 kHz à 55 kHz, de préférence une fréquence de 38,5 kHz à 41,5 kHz, encore mieux de 40,5 kHz.

11. Dispositif selon la revendication 9 ou 10, **caractérisé en ce que** la source sonore (38) est orientée coaxialement à l'axe (18) de la chambre de réaction (19).

12. Dispositif selon l'une quelconque des revendications 9 à 11, **caractérisé en ce qu'**au moins une zone partielle de la surface de délimitation intérieure (20) de la chambre de réaction (19) est réalisée sous la forme d'un réflecteur (39) à concentration sonore.

13. Dispositif selon l'une quelconque des revendications précédentes, **caractérisé en ce que** le générateur de gaz (6) est réalisé avec une source infrarouge.

14. Dispositif selon l'une quelconque des revendications précédentes, **caractérisé en ce que** le générateur de gaz (6) est réalisé avec un aimant (41).

15. Dispositif selon la revendication 14, **caractérisé en ce qu'**une direction de champ magnétique de l'aimant dans la zone de l'axe (18) de la chambre de réaction (19) est orientée antiparallèlement à une direction d'une vitesse angulaire (34) du rotor (32).

16. Dispositif selon l'une quelconque des revendications précédentes, **caractérisé en ce qu'**un réservoir sous pression (4) est réalisé pour le fluide de travail (24).

17. Dispositif selon l'une quelconque des revendications précédentes, **caractérisé en ce que** celui-ci est réalisé sous la forme d'un dispositif de chauffage (1) avec un thermogénérateur (2), un volume intérieur du thermogénérateur (2) étant réalisé avec un matériau fritté (17).

18. Dispositif selon la revendication 17, **caractérisé en ce que** le générateur de gaz (6), le thermogénérateur (2), un échangeur thermique (3), le réservoir sous pression (4) et une pompe (5) sont reliés entre eux pour former un circuit fermé pour le fluide de travail (24).

19. Dispositif selon la revendication 18, **caractérisé en ce qu'**un ventilateur (14) pour évacuer la chaleur de l'échangeur thermique (3) est disposé au niveau de l'échangeur thermique (3).

20. Dispositif selon l'une quelconque des revendications précédentes, **caractérisé en ce qu'**un dispositif de commande (13) est réalisé pour commander l'état de fonctionnement.

21. Dispositif selon la revendication 20, **caractérisé en ce que** le dispositif de commande (13) est réalisé pour une commande automatisée.

22. Procédé pour la transformation de l'énergie moyennant l'utilisation d'un mélange d'hydrogène et d'oxygène ou de gaz de Brown, selon lequel un fluide de travail (24) ou de l'eau est acheminé dans une chambre de réaction (19) réalisée avec une symétrie de révolution par rapport à un axe (18), et un champ électrique (35) est appliqué entre des électrodes (29), une direction de champ électrique étant perpendiculaire à l'axe (18) de la chambre de réaction (19) et le mélange d'hydrogène et d'oxygène ou le gaz de Brown, formé dans la zone de l'axe (18) de la chambre de réaction (19), est évacué hors de la chambre de réaction (19), et le mélange d'hydrogène et d'oxygène ou le gaz de Brown est recombiné pour obtenir de l'eau, **caractérisé en ce que** l'eau est mise en rotation dans la chambre de réaction (19), un axe de rotation (33) de l'eau étant orienté coaxialement à l'axe (18) de la chambre de réaction (19).

23. Procédé selon la revendication 22, **caractérisé en ce que** l'eau et/ou le gaz de Brown sont sollicités avec un champ magnétique dans la chambre de réaction (19), une induction (42) magnétique dans la zone de l'axe (18) de la chambre de réaction (19) étant orientée antiparallèlement à la direction de la vitesse angulaire (34).

24. Procédé selon la revendication 22 ou 23, **caractérisé en ce que** l'eau et/ou le gaz de Brown sont sollicités avec une énergie acoustique dans la chambre de réaction (19).

25. Procédé selon l'une quelconque des revendications 22 à 24, **caractérisé en ce que** l'eau et/ou le gaz de Brown sont sollicités avec un rayon infrarouge dans la chambre de réaction (19).

26. Procédé selon l'une quelconque des revendications 22 à 25, **caractérisé en ce que** l'eau et le gaz de Brown sont transportés dans un circuit fermé.

27. Procédé selon l'une quelconque des revendications 22 à 26, **caractérisé en ce qu'**une vitesse angulaire (34) de la rotation de l'eau dans la chambre de réaction (19) est modifiée périodiquement.

28. Procédé selon l'une quelconque des revendications 22 à 27, **caractérisé en ce qu'**une pression du fluide de travail (24) dans le circuit est modifiée périodiquement.

29. Procédé selon l'une quelconque des revendications 22 à 28, **caractérisé en ce qu'**une intensité sonore d'une source sonore (38) dans la chambre de réaction (19) est modifiée périodiquement.

30. Procédé selon la revendication 29, **caractérisé en ce que** la variation périodique de la pression du fluide de travail (24) par rapport à la variation périodique de l'intensité sonore de la source sonore (38) s'effectuent en opposition de phase.

31. Procédé selon l'une quelconque des revendications 22 à 30, **caractérisé en ce que** la valeur d'une fréquence de la variation périodique de la pression du fluide de travail (24) et/ou de l'intensité sonore de la source sonore (38) et/ou de la vitesse angulaire (34) est choisie dans une plage entre 0,1 Hz et 10 Hz.

32. Procédé selon l'une quelconque des revendications 22 à 31, **caractérisé en ce que** la recombinaison du mélange d'hydrogène et d'oxygène ou du gaz de Brown est effectuée dans un thermogénérateur (2), la chaleur générée à cette occasion étant évacuée avec l'eau.

33. Procédé selon la revendication 32, **caractérisé en ce que** le gaz de Brown dans le thermogénérateur (2) est guidé à travers un matériau fritté (17).
